# EUROPÄISCHE PATENTANMELDUNG

(11) **EP 4 592 218 A1**
(43) Veröffentlichungstag der Anmeldung: **30.07.2025**
(21) Anmeldenummer: 24154159.8
(22) Anmeldetag: 26.01.2024
(51) Int. Cl.: B65G 17/20, B65G 17/48, B65G 19/02, B65G 47/38

(54) **STELLMECHANIK UND TASCHE**

(71) Anmelder: Logicdata Electronic & Software Entwicklungs GmbH, 8530 Deutschlandsberg (AT)
(72) Erfinder: PUCK, Hannes, 8510 Stainz (AT)
(74) Vertreter: Epping - Hermann - Fischer

(57) **Zusammenfassung**

Eine Stellmechanik (100) zum Einbau in einer Tasche (400) für ein Hängeförderersystem ist eingerichtet zum Wechseln eines Zustands der Tasche (400) zwischen einem Beladezustand, in dem die Tasche (400) mit Objekten beladen werden kann, und einem Entladezustand, in dem die Objekte aus der Tasche (400) entladen werden. Die Stellmechanik (100) umfasst ein Gehäuse (110, 110', 110''), eine drehbar im Gehäuse (110, 110', 110") gelagerte Profilscheibe (120, 120', 120'') mit einer Kontaktfläche (130, 130', 130") und mindestens einen axial im Gehäuse (110, 110', 110") verschiebbaren Riegel (140, 140', 140"). Für jeden Riegel (140, 140', 140") ist ein zugeordnetes Rückstellelement (170', 170") vorgesehen, das den jeweiligen Riegel (140, 140', 140") gegen die Kontaktfläche (130, 130', 130") drückt. Die Kontaktfläche (130, 130', 130") weist eine Oberfläche mit einem Höhenprofil auf. Jeder Riegel (140, 140', 140") wird bei einer Drehbewegung der Profilscheibe (120, 120', 120") axial verschoben und entlang des Höhenprofils geführt. Eine durch eine Drehbewegung der Profilscheibe (120, 120', 120") verursachte axiale Verschiebung des mindestens einen Riegels (140, 140', 140") bewirkt das Wechseln des Zustands der Tasche.

## Beschreibung

Die Erfindung betrifft eine Stellmechanik zum Einbau in einer Transporttasche zum Transportieren von Produkten in einem Hängefördersystem. Die Erfindung betrifft ferner eine Tasche mit einer solchen Stellmechanik.

Transporttaschen und Hängefördersysteme sind grundsätzlich bekannt und umfassen typischerweise ein Aufhängeelement zum Aufhängen der Transporttasche an dem Hängefördersystem, einen über eine Befüllöffnung mit Produkten befüllbaren Taschenkörper mit einer Vorderwand und einer Rückwand, wobei die Rückwand und die Vorderwand jeweils an ihrem unteren Ende durch zumindest ein Verschlusselement miteinander verbunden sind. Ein Hängefördersystem umfasst ein oder mehrere Belade- und Entladestationen. In einer Entladestation wird das Verschlusselement mittels einer Stellmechanik getrennt bzw. geöffnet und die Produkte fallen aus dem Taschenkörper. Spätestens in einer Beladestation sind Stellmechanik und Verschlusselement wieder miteinander verbunden und damit die Vorder- und Rückwand miteinander verbunden, damit die Tasche neu befüllt werden kann.

Eine zu lösende Aufgabe besteht darin, ein verbessertes Verschlusskonzept für das Öffnen und Schließen einer Transporttasche anzugeben.

Diese Aufgabe wird gelöst mit dem Gegenstand der unabhängigen Ansprüche. Weiterbildungen sind in den abhängigen Ansprüchen gekennzeichnet.

Das verbesserte Verschlusskonzept umfasst insbesondere eine Stellmechanik, welche mechanisch einfach und kostengünstig aufgebaut ist und sich gleichzeitig durch eine schnelle Öffnungszeit und hohe Zuverlässigkeit auszeichnet.

Die Stellmechanik ist zum Wechseln eines Zustands der Tasche zwischen einem Beladezustand, in dem die Tasche mit Objekten wie z.B. Waren beladen werden kann, und einem Entladezustand eingerichtet, in dem die Objekte aus der Tasche entladen werden. Gemäß dem verbesserte Verschlusskonzept umfasst die Stellmechanik mindestens ein Gehäuse, eine drehbar im Gehäuse gelagerte Profilscheibe mit mindestens einer Kontaktfläche und mindestens einen axial im Gehäuse verschiebbaren Riegel, wobei für jeden Riegel ein zugeordnetes Rückstellelement, etwa eine Feder, vorgesehen ist, das den jeweiligen Riegel gegen die Kontaktfläche drückt. Dabei weist jede Kontaktfläche eine Oberfläche mit einem Höhenprofil auf. Jeder Riegel wird bei einer Drehbewegung der Profilscheibe axial verschoben und entlang des Höhenprofils geführt. Eine durch eine Drehbewegung der Profilscheibe verursachte axiale Verschiebung des mindestens einen Riegels bewirkt das Wechseln des Zustands der Tasche.

Dem verbesserten Verschlusskonzept liegt unter anderem die Idee zugrunde, das Öffnen der Transporttasche dadurch zu beschleunigen, dass die Energie für die axiale Verschiebung des Riegels der Stellmechanik aus der in dem Rückstellelement bzw. der Feder gespeicherten potentiellen Energie gespeist wird.

Beispielsweise weist die Kontaktfläche ein Höhenprofil mit mindestens zwei Bereichen unterschiedlicher Höhe auf, die durch mindestens eine absteigende Flanke und mindestens eine ansteigende Flanke miteinander verbunden sind, wobei die Steilheit der absteigenden Flanke steiler ist als die Steilheit der ansteigenden Flanke, beispielsweise um einen Faktor größer als 5 oder 10 steiler ist.

In einer Ausgestaltung erfolgt die Freisetzung dieser potentiellen Energie durch eine abfallende Flanke im Höhenprofil der Profilscheibe schlagartig, z.B. bei einer senkrechten oder im Wesentlichen senkrechten Flanke.

Da im Wesentlichen das Rückstellelement bzw. die Feder für das schnelle, insbesondere schlagartige Öffnen bzw. das schlagartige Verschieben des Riegels verantwortlich ist, werden keine hohen Ansprüche an die Geschwindigkeit, oder das Drehmoment eines Antriebs der Profilscheibe gestellt.

Insbesondere dann, wenn sich der Riegel vor dem Öffnen unmittelbar vor der abfallenden Flanke befindet, muss der Antrieb die Profilscheibe nur minimal und mit geringer Geschwindigkeit drehen, bis sich der Riegel schlagartig verschiebt.

Beispielsweise wird die Profilscheibe durch einen Antrieb direkt oder indirekt unter Nutzung eines Getriebes gedreht. Ferner erfolgt die Drehbewegung der Profilscheibe beispielsweise unidirektional.

Bei Verwendung eines Antriebs in Form eines elektrischen Motors sind daher nur geringe Drehmomente und Ströme nötig, um ein schlagartiges Öffnen zu verursachen. Somit lassen sich geringe Baugröße und günstige Motoren verwenden. Im Gegensatz zu rein mechanischen Öffnungsprinzipien, sind Motoren aber wenig störanfällig und verklemmen nicht.

Beispielsweise umfasst die Stellmechanik ferner einen oder mehrere Positionsgeber, die eingerichtet sind, eine Winkelposition der Profilscheibe zu ermitteln, wobei die Stellmechanik eingerichtet ist, eine Drehbewegung der Profilscheibe mithilfe der ermittelten Winkelposition unmittelbar vor einer bzw. jeder der absteigenden Flanken zu stoppen. Dies kann beispielsweise durch eine entsprechende Steuerelektronik implementiert sein. Damit kann die Zeit bzw. Strecke bis zum schlagartigen Verschieben des Riegels geringgehalten bzw. minimiert werden.

In einer weiteren Ausprägung weist die Stellmechanik einen Auslösemechanismus auf. Das Hängeförderersystem kann über diesen Auslösemechanismus die Öffnung der Tasche z.B. über einen elektrischen Impuls auslösen. Die Schnittstelle zwischen Auslösemechanismus und Hängeförderersystem kann kabelgebunden oder kabellos sein.

In einer weiteren Ausprägung kann der elektrische Motor stromlos sein, wenn die Tasche beladen ist und sich von der Beladestation zur Entladestation bewegt. Das Rückstellelement hält den Riegel in seiner Position.

In verschiedenen Ausgestaltungen ist jede Kontaktfläche der Profilscheibe radial angeordnet, beispielsweise auf der Umfangsfläche der Profilscheibe. Dabei kann die Profilscheibe etwa zwei (oder mehr) Kontaktflächen aufweisen, die auf den Umfang aufgeteilt sind, etwa jeweils zur Hälfte. In diesem Fall können mit einer Profilscheibe zwei Riegel bewegt bzw. geführt werden, für jede Kontaktfläche einer.

In alternativen Ausgestaltungen weist die Profilscheibe eine, insbesondere genau eine, Kontaktfläche auf, die axial angeordnet ist, etwa auf einer Stirnseite der Profilscheibe. Beispielsweise ist genau eine Kontaktfläche axial angeordnet. Damit kann ein Riegel bewegt werden.

Beispielsweise ist für jede Kontaktfläche genau ein Riegel vorgesehen.

In einer Weiterbildung umfasst die Stellmechanik ferner eine weitere drehbar im Gehäuse gelagerte Profilscheibe mit einer, etwa genau einer, Kontaktfläche, die axial, etwa auf einer Stirnseite der weiteren Profilscheibe angeordnet ist. Damit kann ein weiterer Riegel bewegt werden. Beispielsweise sind die beiden Profilscheiben mechanisch gekoppelt, um die beiden Riegel gemeinsam bewegen zu können.

In den verschiedenen Ausgestaltungen trifft jeder Riegel beispielsweise senkrecht oder im Wesentlichen senkrecht auf eine der Kontaktflächen.

In einer weiteren Ausprägung umfasst die Stellmechanik Schnapper, damit ein Schließen einer Tasche stromlos möglich ist. Beispielsweise umfasst jeder Riegel an einem Ende einen elastischen, insbesondere federnd gelagerten, Schnapper.

Wie eingangs erwähnt lässt sich die Stellmechanik in einer Tasche, insbesondere einer Transporttasche einsetzen. Beispielsweise erfolgt der Einbau der Stellmechanik in die Tasche in horizontaler oder vertikaler Richtung der Tasche.

Ein Ausführungsbeispiel einer Tasche gemäß dem verbesserten Verschlusskonzept, etwa einer Transporttasche eines Hängefördersystems, umfasst neben einer Stellmechanik gemäß einer der beschriebenen Ausführungsformen ein Verschlusselement, das an wenigstens einer Stirnseite eine Öffnung, etwa einen Schlitz, aufweist. Dabei greift im Beladezustand mindestens ein Riegel der Stellmechanik in eine der Öffnungen des Verschlusselements ein. Im Entladezustand greift dagegen keiner der Riegel der Stellmechanik in eine der Öffnungen ein.

Das Verschlusselement ist beispielsweise in die Tasche eingenäht.

Das verbesserte Verschlusskonzept wird nachfolgend anhand von Ausführungsbeispielen unter Bezugnahme auf die Zeichnungen näher erläutert. Hierbei sind gleichartige Elemente oder Elemente gleicher Funktionen mit denselben Bezugszeichen bezeichnet. Daher wird auf eine wiederholte Erläuterung einzelner Elemente gegebenenfalls verzichtet. Die Ausführungsbeispiel dienen dabei der Erläuterung und nicht etwa der Abgrenzung des verbesserten Verbindungskonzepts.

Es zeigen, teils vereinfacht:
- Figur 1: eine Explosionszeichnung eines Ausführungsbeispiels der Stellmechanik;
- Figur 2a: eine Ansicht eines Ausführungsbeispiels der Stellmechanik im Entladezustand;
- Figur 2b: eine Ansicht eines Ausführungsbeispiels der Stellmechanik im Beladezustand;
- Figur 3a: eine Ansicht eines Ausführungsbeispiels der Profilscheibe und Riegel im Entladezustand;
- Figur 3b: eine Ansicht des Ausführungsbeispiels der Profilscheibe und Riegel im Beladezustand;
- Figur 4a: eine Ansicht eines Ausführungsbeispiels einer Profilscheibe mit stirnseitigem Höhenprofil;
- Figur 4b: ein Ausführungsbeispiel eines Höhenprofils;
- Figur 5a: ein Ausführungsbeispiel der Stellmechanik mit zwei Motoren und zwei Riegeln;
- Figur 5b: ein Ausführungsbeispiel der Stellmechanik mit nur einem Riegel;
- Figur 6a: eine Querschnittsansicht durch ein Ausführungsbeispiel einer Stellmechanik mit federnd gelagertem Schnapper im Entladezustand;
- Figur 6b: eine Querschnittsansicht durch das Ausführungsbeispiel der Stellmechanik einer Stellmechanik mit federnd gelagertem Schnapper im Beladezustand;
- Figur 7a: eine Ansicht eines Ausführungsbeispiels einer Tasche im Beladezustand;
- Figur 7b: eine Ansicht des Ausführungsbeispiels einer Tasche im Entladezustand;
- Figur 8: eine Ansicht eines Ausführungsbeispiels des Verschlusselements;
- Figur 9: eine Detailansicht eines Ausführungsbeispiels des Verschlusselements einer Tasche im Beladezustand; und
- Figur 10: eine Darstellung eines weiteren Ausführungsbeispiels eines Höhenprofils.

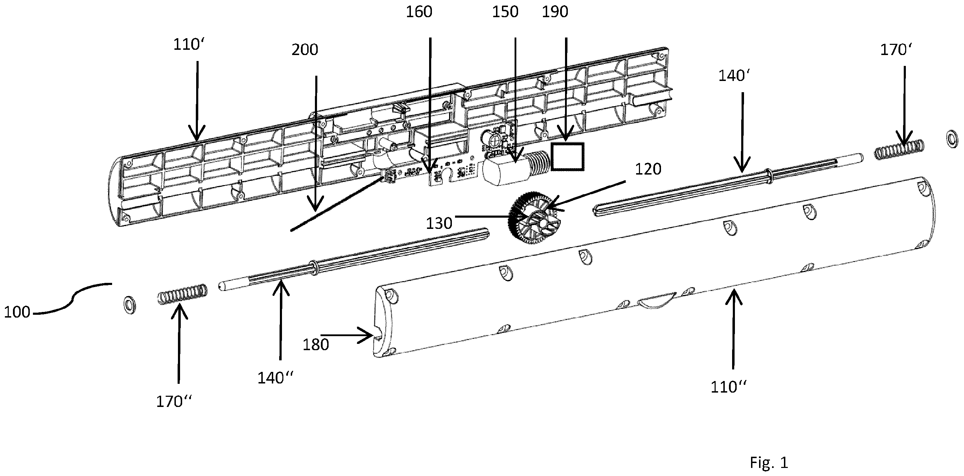

Figur 1 zeigt ein Ausführungsbeispiel einer Stellmechanik 100 zum Einbau in einer Tasche, beispielsweise einer Transporttasche für ein Hängefördersystem. Die Stellmechanik 100 ist grundsätzlich zum Wechseln eines Zustands der Tasche zwischen einem Beladezustand, in dem die Tasche mit Objekten wie z.B. Waren beladen werden kann, und einem Entladezustand eingerichtet, in dem die Objekte aus der Tasche entladen werden. Die Stellmechanik 100 weist vorliegend ein Gehäuse, beispielsweise gebildet aus zwei Hälften 110', 110", eine drehbar im Gehäuse gelagerte Profilscheibe 120 mit zwei Kontaktflächen 130 sowie zwei axial im Gehäuse verschiebbaren Riegel 140', 140" auf. Grundsätzlich sind mindestens eine Kontaktfläche 130 und mindestens ein axial im Gehäuse verschiebbarer Riegel 140', 140" vorgesehen.

Die Stellmechanik 100 der Ausprägung in Figur 1 weist beispielsweise einen axial ausgerichteten elektrischen Motor 150 und die Profilscheibe 120 auf, die mit einem Schneckenradantrieb durch den Motor 150 angetrieben wird.

Zusätzlich befindet sich eine Platine mit einer elektrischen Schaltung 160 zum Antrieb des Motors 150 im Gehäuse 110', 110". Die Platine weist z.B. Anschlüsse für die Spannungsversorgung auf (nicht eingezeichnet). Die elektrische Schaltung 160, die nicht zwingend Bestandteil der Stellmechanik 100 ist, ist eingerichtet, ein Auslösesignal für das Umschalten der Stellmechanik 100 vom Beladezustand zum Entladezustand zu erhalten, beispielweise durch ein Kabel 200 oder auch kabellos.

Weiters ist die Schaltung 160 etwa eingerichtet, ein Signal von einem Positionsgeber 190, beispielsweise Drehpositionssensor, zu erhalten, der die Drehposition des Motors 150 anzeigt. Der Positionsgeber bestimmt über die Drehposition des Motors 150 die Drehposition der Profilscheibe. Der Positionsgeber 190 kann z.B. ein Hallsensor sein. Der Positionsgeber 190 befindet sich innerhalb des Gehäuses 110', 110" der Stellmechanik 100.

Die Riegel 140', 140" sind axial im Gehäuse 110', 110" eingesetzt und werden durch jeweils ein Rückstellelement 170', 170", beispielsweise eine Feder, pro Riegel 140', 140" gegen die Profilscheibe 120 gedrückt.

Das Gehäuse 110', 110" weist vorliegend an jeder Stirnseite eine Öffnung 180', 180" auf, durch die ein Ende des Riegels im Beladezustand das Gehäuse 110', 110" durchdringt.

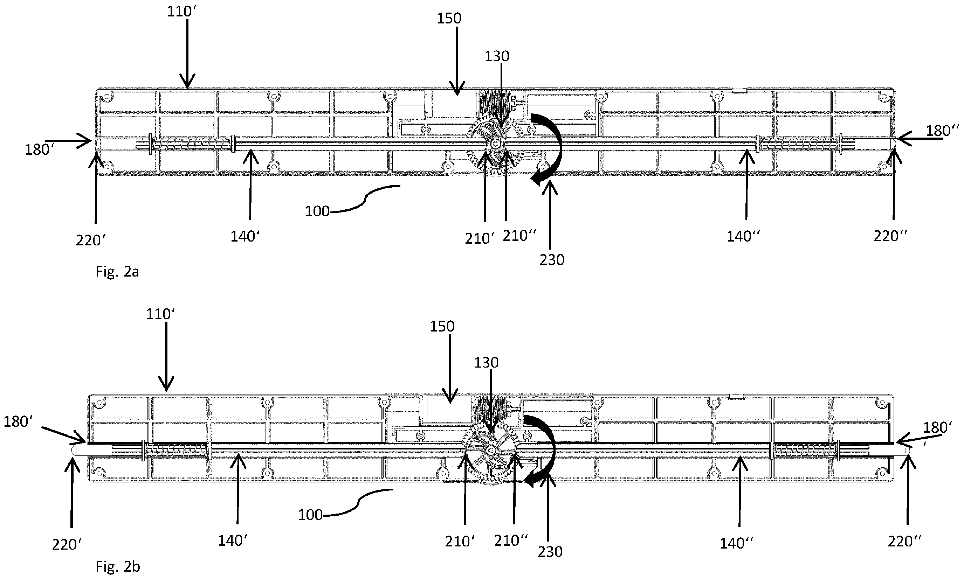

Die Fig. 2a und 2b zeigen Ansichten der Stellmechanik 100 aus Fig. 1 für den Entladezustand (Fig. 2a) und den Beladezustand (Fig. 2b).

Im Entladezustand befinden sich die beiden ersten Enden 210', 210" der beiden Riegel 140', 140" an einem tief gelegenen Bereich des Höhenprofils 130 der Profilscheibe 120. Die beiden zweiten Enden 220', 220' der beiden Riegel 140', 140" ragen nicht über das Ende des Gehäuses 110' hinaus.

Im Beladezustand befinden sich die beiden ersten Enden 210', 210" der beiden Riegel 140', 140" an einem hoch gelegenen Bereich des Höhenprofils 130 der Profilscheibe 120, beispielweise unmittelbar vor einer Flanke, die zu einem tief gelegenen Bereich führt. Die beiden zweiten Enden 220', 220' der beiden Riegel 140', 140" ragen über das Ende des Gehäuses 110' hinaus.

Die Drehrichtung 230 der Profilscheibe ist vorzugsweise unidirektional.

Jeder Riegel 140', 140" trifft vorzugsweise senkrecht oder im Wesentlichen senkrecht auf die entsprechende Kontaktfläche 130.

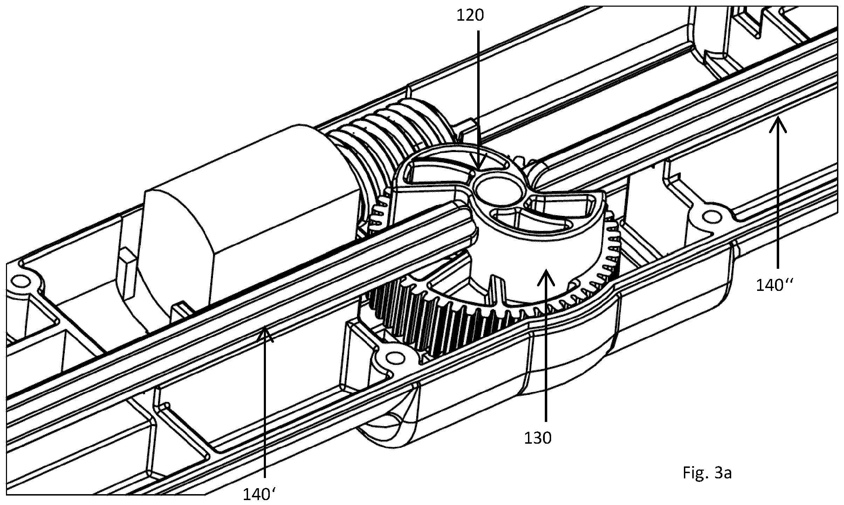

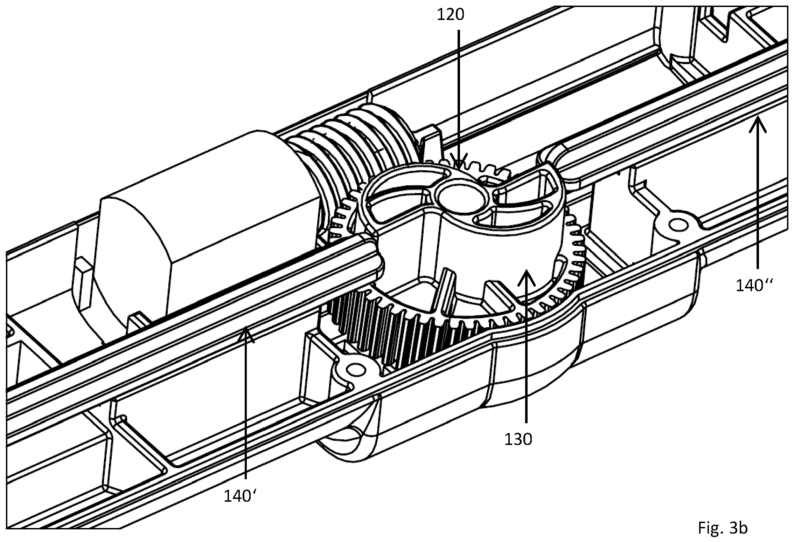

Die Fig. 3a und die Fig. 3b sind jeweils Detailansichten der Fig. 2a und Fig 2b. Die Profilscheibe 120 umfasst die Kontaktflächen 130, die jeweils eine Oberfläche mit einem Höhenprofil aufweisen. In dieser Ausprägung sind die Kontaktflächen radial, insbesondere auf der Umfangsfläche der Profilscheibe 120 angeordnet und teilen den Umfang gleichmäßig auf. Als Höhenprofil einer radialen Kontaktfläche im Sinne des verbesserten Verschlusskonzepts ist ein, um den Umfang einer Profilscheibe 120 laufendes Profil zu verstehen, das über den Umfangsverlauf unterschiedliche Abstände zum Mittelpunkt der Profilscheibe 120 aufweist.

Der mindestens eine, vorliegend die beiden Riegel 140', 140" werden bei einer Drehbewegung der Profilscheibe 120 entlang des Höhenprofils geführt und axial verschoben. Die durch die Drehbewegung der Profilscheibe 120 verursachte axiale Verschiebung der beiden Riegel 140', 140" wechselt den Zustand der Stellmechanik vom Entladezustand in den Beladezustand der Tasche.

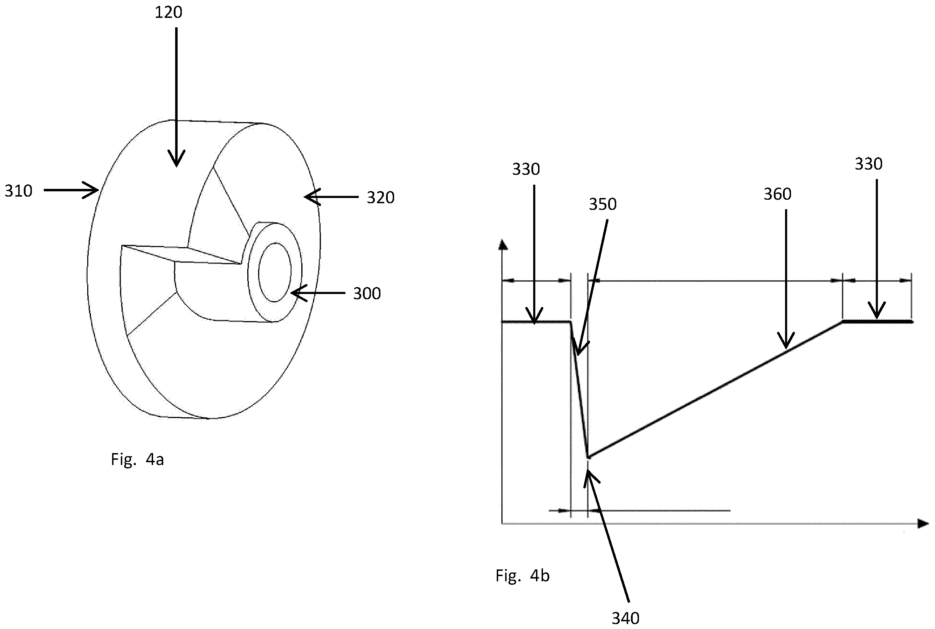

Fig. 4a zeigt eine weitere Ausprägung einer Profilscheibe 120, bei die Profilscheibe 120 an seiner Stirnseite 300 eine Kontaktfläche mit einem axialen Höhenprofil 320 aufweist. Als Höhenprofil einer axialen Kontaktfläche im Sinne des verbesserten Verschlusskonzepts ist ein im Bereich der Stirnseite 300 einer Profilscheibe 120 verlaufendes Profil zu verstehen, das in Abhängigkeit vom Drehwinkel unterschiedliche Abstände zur Basisfläche 310 der Profilscheibe 120 aufweist.

In der Fig. 4b ist das axiale Höhenprofil 320 der Profilscheibe in Fig. 4a als Diagramm dargestellt. In der Y-Achse ist der Abstand zur Basisfläche 310 abgebildet. In der X-Achse ist ein Drehwinkel abgebildet. Das Höhenprofil weist hoch gelegene Bereiche 330, tief gelegene Bereiche 340 und absteigende Flanken 350 bzw. ansteigende Flanken 360 auf.

Bei einer Drehung der Profilscheibe 120 gleitet der Riegel 140', 140" auf der Kontaktfläche entlang des Höhenprofils. Im Beladezustand befindet sich ein Riegel beispielsweise in einem hochgelegenen Bereich 330. Im Entladezustand befindet sich der Riegel in einem tief gelegenen Bereich 340. Durch eine Drehbewegung der Profilscheibe bewegt sich ein Riegel von einem hochgelegenen Bereich 330 über eine abfallende Flanke 350 in einen tief gelegenen Bereich 340 und weiter über eine ansteigende Flanke 360 in einen hoch gelegenen Bereich 330. Somit wechselt der Zustand der Stellmechanik 100 vom Beladezustand in den Entladezustand und zurück.

Ein Höhenprofil kann mehrere hochgelegene und mehrere tiefgelegene Bereich umfassen. Fig. 4b zeigt den einfachsten Fall mit einem hochgelegenen Bereich 330 und einem tiefgelegenem Bereich 340. Sowohl radiale Höhenprofile als auch axiale Höhenprofile können ein oder mehrere hoch gelegene und tief gelegene Bereich aufweisen.

Absteigende Flanken 350 des Höhenprofils sind z.B. senkrecht oder im Wesentlichen senkrecht. Ansteigende Flanken 360 sind stetig ansteigend. Beispielsweise weist die ansteigende Flanke eine Keilform auf. In anderen Ausprägungen kann die Flanke aber auch eine gekrümmte, insbesondere konvexe oder konkave Form aufweisen, wie beispielsweise in Fig. 3a und Fig. 3b im Zusammenhang mit einem radialen Höhenprofil sichtbar.

Wie in Fig. 4b sichtbar ist die Steilheit der absteigenden Flanke 350 wesentlich größer als die Steilheit der ansteigenden Flanke 360. Dadurch wird sichergestellt, dass der Wechsel vom Beladezustand in den Entladezustand innerhalb einer Winkeländerung von wenigen Grad erfolgt. Es ist nur eine geringe Drehbewegung um wenige Grade erforderlich, um den Riegel vom Beladezustand in den Entladezustand zu bringen. Durch die Energie im gespannten Rückstellelement 170', 170" ändert ein Riegel 140', 140" schlagartig seinen Zustand.

Durch die Rampe kann das Rückstellelement 170', 170" vergleichsweise langsam, d.h. über eine lange Drehbewegung über viele Grade wieder in den Beladezustand gebracht werden. Gleichzeitig erfolgt auf diesem Weg ein Energietransfer in das Rückstellelement 170', 170", beispielsweise das Spannen einer Feder. Das dafür nötige Drehmoment des Antriebs ist gering.

Eine Profilscheibe 120, wie in Fig. 4a dargestellt, eignet sich insbesondere zum Führen eines einzelnen Riegels. Falls in Analogie zur Ausführung der Stellmechanik wie in Fig. 1 zwei Riegel vorgesehen werden sollen, kann dies durch Vorsehen einer zweiten Profilscheibe 120 erreicht werden, die etwa synchron mit der ersten Profilscheibe 120 angesteuert bzw. angetrieben wird.

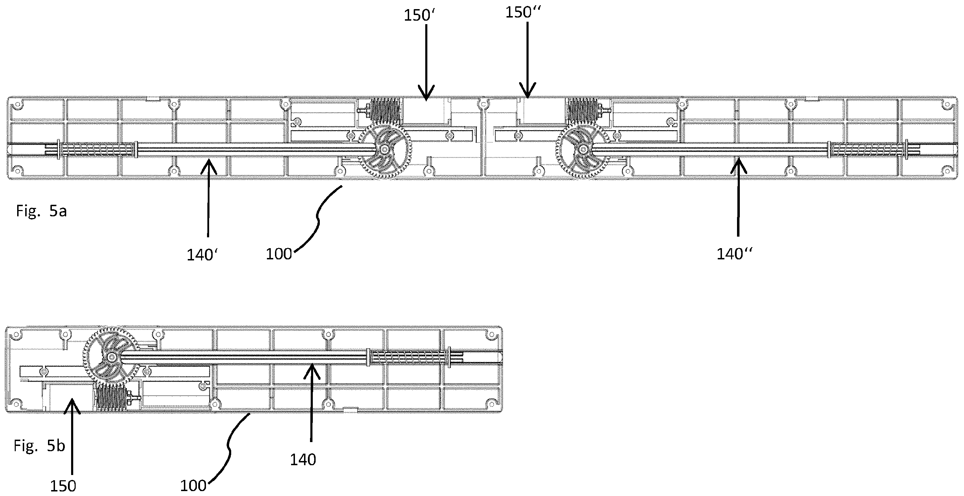

Die Fig. 5a und 5b zeigen weitere Ausprägungen für eine Stellmechanik 100. Fig. 5a zeigt einen Aufbau mit mehreren Antrieben 150', 150", die jeweils über eine Profilscheibe 120', 120" einen Riegel 140', 140" antreiben. Die Antriebe 150', 150" mit Profilscheibe und Riegel können in separaten oder in einem gemeinsamen Gehäuse untergebracht sein. Fig. 5b zeigt einen Aufbau mit einem Antrieb 150, der über eine Profilscheibe 120 einen Riegel 140 antreibt.

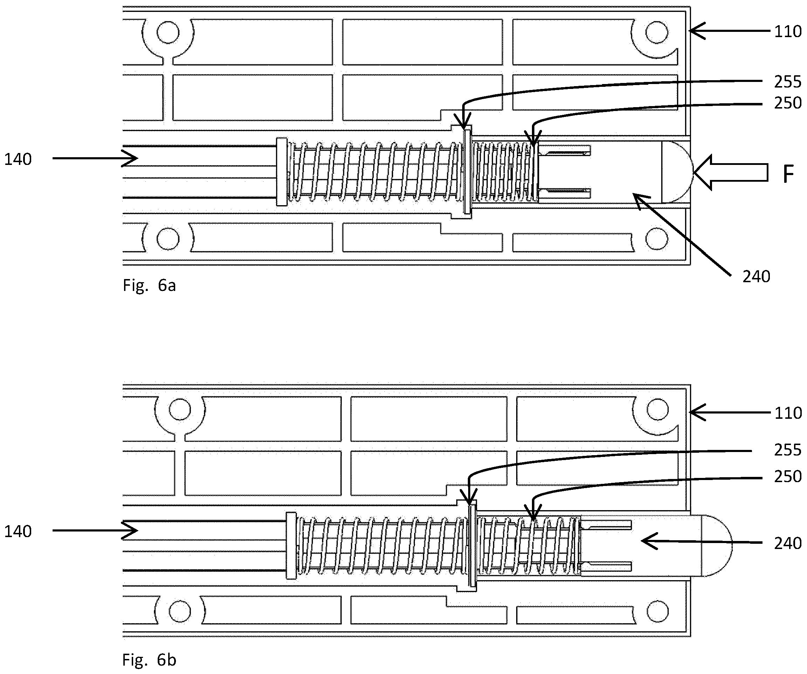

Die Fig. 6a und 6b zeigen eine weitere Ausprägung für eine Stellmechanik 100, bei der ein Riegel 140 an seinem zweiten Ende 220 einen elastischen, insbesondere federnd gelagerten Schnapper 240 aufweist. Im Beladezustand der Stellmechanik 100 ragt der Schnapper 240 über das Gehäuse 110 der Stellmechanik. Im Entladezustand der Stellmechanik 100 ragt der Schnapper 240 nicht über das Gehäuse 110 der Stellmechanik.

Der Schnapper 240 lässt sich im Beladezustand axial entlang des Riegels 140 von einer überragenden Position in eine Position verschieben, bei der der Schnapper 240 im Wesentlichen bündig mit dem Gehäuse 110 der Stellmechanik ist.

Die axiale Verschiebung erfolgt durch eine externe Kraft F, die beispielsweise gegen eine Schnapperfeder 250 wirkt.

Der Schnapper 240 ist durch einen Hinterschnitt 255 abgestützt.

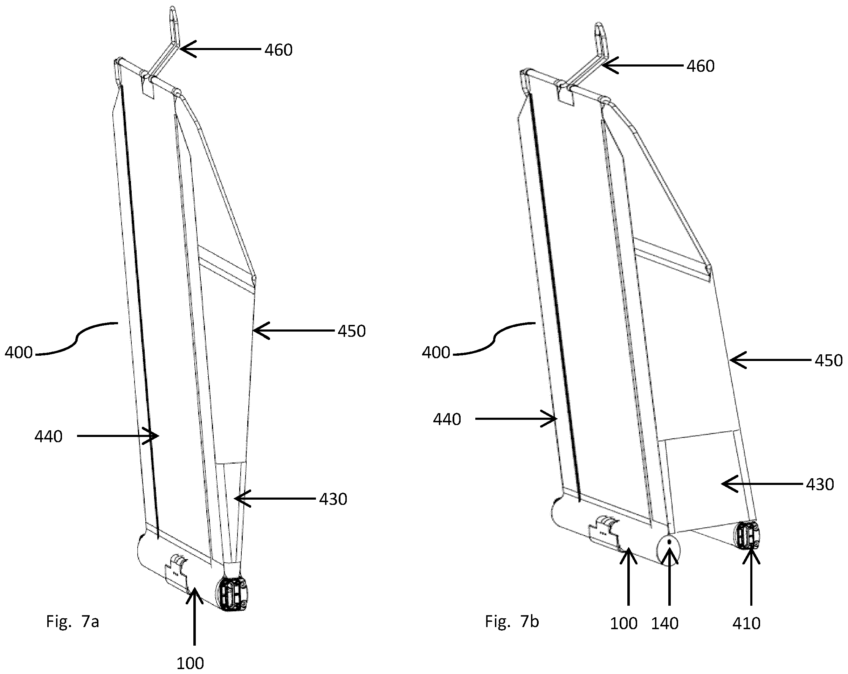

Die Fig. 7a und 7b zeigen eine Tasche 400 mit beispielsweise horizontal eingebauter Stellmechanik 100 im Beladezustand (Fig. 7a) und im Entladezustand (Fig. 7b).

Die Tasche 400 umfasst eine Vorderwand 450 eine Rückwand 440, zwei Seitenteile 430, eine Stellmechanik 100, die beispielsweise Teil der Rückwand 440 ist, und ein Verschlusselement 410, das beispielsweise Teil der Vorderwand 450 ist. Die Seitenwände 430 sichern Objekte wie Waren in der Tasche 400 gegen seitliches Herausfallen.

Im Beladezustand in Fig. 7a sind die Stellmechanik 100 und das Verschlusselement 410 miteinander über die mehreren, beispielsweise zwei Riegel 140 der Stellmechanik 100 verbunden und die Tasche 410 daher an ihrer Basis verbunden. Es können Objekte bzw. Waren in der Tasche 400 transportiert werden, ohne dass die Objekte bzw. Waren seitlich oder senkrecht aus der Tasche 400 fallen können.

Im Entladezustand in Fig. 7b sind die Stellmechanik 100 und das Verschlusselement 410 voneinander getrennt. Es können Objekte bzw. Waren durch ihr Eigengewicht, bzw. die Schwerkraft senkrecht nach unten aus der Tasche 400 fallen.

Ein Hängefördersystem transportiert eine Vielzahl einzelner Taschen 400, hängend am jeweiligen Aufhängeelement 460, zwischen Beladestationen zu Entladestationen. In einer Entladestation wird das Verschlusselement 410 mittels der Stellmechanik 100 vom Verschlusselement 410 getrennt und die Objekte bzw. Waren können aus dem Taschenkörper fallen. Die Tasche 400 befindet sich dabei im Entladezustand. Spätestens in einer Beladestation sind Stellmechanik 100 und Verschlusselement 410 wieder verbunden, bzw. Vorderwand 450 und Rückwand 440 verbunden, damit die Tasche 400 neu befüllt werden kann. Die Tasche 400 befindet sich dann im Beladezustand.

Vorderwand 450, Rückwand 440 und Seitenwände 430 sind beispielsweise aus Stoff genäht. Verschlusselement 410 und Stellmechanik 100 sind vorliegend in den Stoff eingenäht. Beispielsweise sind das Verschlusselement 410 in die Vorderwand 450 und die Stellmechanik 100 in die Rückwand 440 eingenäht.

Die Tasche 400 umfasst Anschlüsse, beispielsweise Kabel 200, zur Spannungsversorgung des Antriebs 150, 150', 150", bzw. für ein Auslösesignal für das Umschalten der Stellmechanik 100 vom Beladezustand zum Entladezustand.

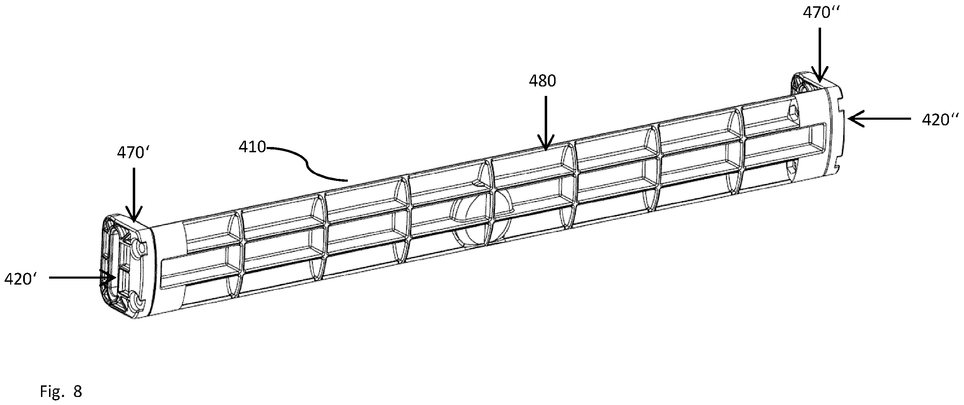

Die Fig. 8 zeigt eine Ausprägung für ein Verschlusselement 410. Diese Ausprägung weist zwei Stirnseiten 470', 470" und eine Längsseite 480 auf, die die beiden Stirnseiten 470', 470" miteinander verbindet. Die beiden Stirnseiten 470', 470" weisen jeweils eine Öffnung 420', 420" auf. Diese Öffnung ist beispielsweise schlitzförmig.

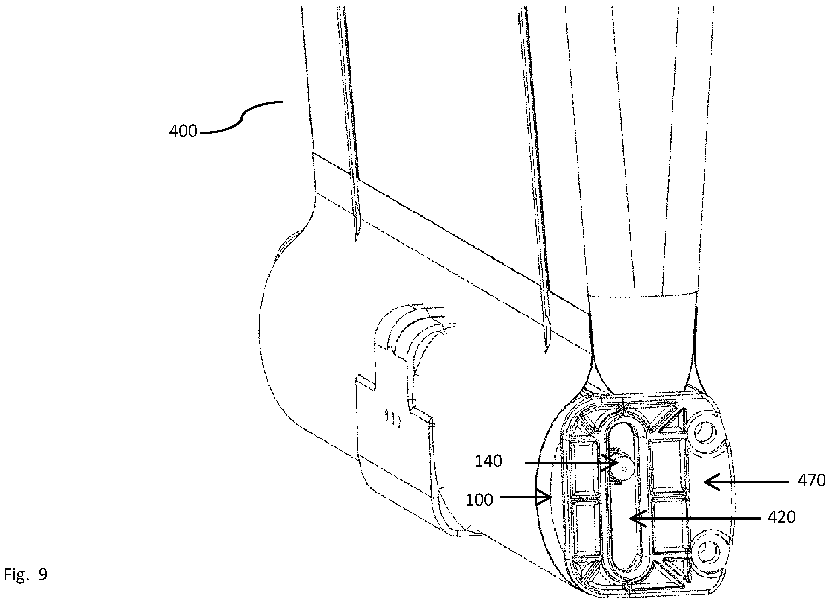

Die Fig. 9 zeigt das Zusammenspiel zwischen einem Riegel 140, der Stellmechanik 100 und der Öffnung 420 des Verschlusselements 410 an einer Stirnseite 470 des Verschlusselements 410. Im Beladezustand greift der Riegel 140 in die Öffnung 420 ein. Der Riegel 140 überragt das Gehäuse 110 der Stellmechanik 100. Verschlusselement 410 und Stellmechanik 100 sind miteinander verbunden. Die Tasche 400 ist geschlossen.

Mit Verweis auf Fig. 1 ist die Schaltungsplatine 160 der Stellmechanik 100 eingerichtet mittels einer oder mehrerer Positionsgeber 190 eine Winkelposition der Profilscheibe 120 zu ermitteln.

Weiters kann die Schaltungsplatine 160 der Stellmechanik 100 eingerichtet sein, ein Auslösesignal zu detektieren, das vom Hängeförderersystem ausgelöst wird, wenn die Tasche geöffnet bzw. geschlossen werden soll. Das Auslösesignal startet jeweils mittels der Schaltungsplatine 160 eine Drehbewegung der Profilscheibe 120.

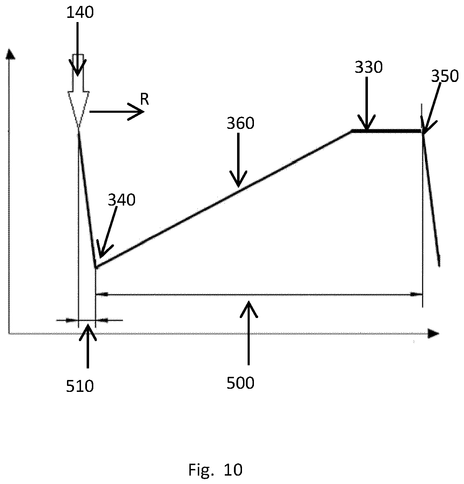

Eine erste Drehbewegung 500 (siehe Fig. 10) sorgt dafür, dass ein Riegel 140 entlang des Höhenprofils der Profilscheibe 120 von einem tief gelegenen Bereich 340 entlang einer ansteigenden Flanke 360 zu einem hoch gelegenen Bereich 330 geführt wird. Ein oder mehrere Positionsgeber 190 bestimmen die genaue Drehlage bzw. Drehposition der Profilscheibe 120.

Eine zweite Drehbewegung 510 (siehe Fig. 10) sorgt dafür, dass ein Riegel 140 entlang des Höhenprofils der Profilscheibe 120 von einem hoch gelegenen Bereich 330 entlang einer absteigenden Flanke 350 zu einem tief gelegenen Bereich 340 geführt wird.

Der Riegel 140 bewegt sich unidirektional in Bewegungsrichtung R entlang des Höhenprofils.

In einer bevorzugten Ausprägung stoppt die erste Drehbewegung 500 unmittelbar vor der nächsten absteigenden Flanke 350, damit die darauffolgende zweite Drehbewegung 510 den Riegel 140 unmittelbar, d.h. mit nur wenig Drehbewegung und damit schlagartig in den nächsten tief gelegenen Bereich 340 bringt.

Das Auslösesignal kann z.B. ein Impulssignal sein. Jeder Impuls löst abwechselnd die erste Drehbewegung 500 oder die zweite Drehbewegung 510 aus.

Um eine Tasche 400 zu verschließen, wird die Stellmechanik in den Entladezustand gebracht, d.h. die Riegel 140, 140' 140'' ragen nicht über das Gehäuse 110 der Stellmechanik 100 hinaus. Somit kann das Gehäuse 110 der Stellmechanik und das Verschlusselement 410 so in Deckung gebracht werden, dass in weiterer Folge die Riegel 140', 140" der Stellmechanik mit den Öffnungen des Verschlusselements 420, 420" korrespondieren und die Riegel durch Wechseln in den Beladezustand ausfahren und in die Öffnungen eingreifen. Somit ist ein Schließen der Tasche 400 in dieser Ausprägung nicht ohne Spannungsversorgung und Ansteuern des Antriebs 150, 150', 150" möglich.

Ein stromloses Verschließen der Tasche 400 ist mittels der Ausprägung mit den Schnappern 240 möglich. Nach dem Entladen der Tasche 400 in einer Entladestation wird die Stellmechanik 100 in den Beladezustand gebracht, d.h. die Riegel 140', 140" mit den Schnappern 240 überragen das Gehäuse 110 der Stellmechanik. Da jeder Schnapper 240 elastisch, insbesondere federnd gelagert, axial verschieblich auf dem zweiten Ende jedes Riegels 220', 220" angebracht ist, können das Gehäuse 110 der Stellmechanik und das Verschlusselement 410 so in Deckung gebracht werden, dass in weiterer Folge die Schnapper 240 jedes Riegels 140', 140" der Stellmechanik mit den Öffnungen des Verschlusselements 420, 420" korrespondieren und einschnappen, ohne dass die Riegel 140', 140" ihre Position durch Drehbewegung des Antriebs 150, 150', 150" wechseln müssen.

### Bezugszeichenliste

- 100: Stellmechanik
- 110, 110', 110": Gehäuse
- 120, 120', 120": Profilscheibe
- 130, 130', 130': Kontaktfläche
- 140, 140', 140": Riegel
- 150, 150', 150": Antrieb
- 160: Schaltungsplatine
- 170', 170": Rückstellelement
- 180', 180": Öffnung in der Stirnseite des Gehäuses
- 190: Positionsgeber
- 200: Kabel
- 210', 210": erstes Ende eines Riegels
- 220', 220": zweites Ende eines Riegels
- 230: Drehrichtung der Profilscheibe
- 240: Schnapper
- 250: Schnapperfeder
- F: externe Kraft
- R: Bewegungsrichtung des Riegels

- 300: Stirnfläche
- 310: Basisfläche
- 320: axiales Höhenprofil
- 330: hoch gelegene Bereiche
- 340: tief gelegene Bereiche
- 350: absteigende Flanken
- 360: ansteigende Flanken

- 400: Tasche
- 410: Verschlusselement
- 420, 420', 420": Öffnung des Verschlusselements
- 430: Seitenwand der Tasche
- 440: Rückwand
- 450: Vorderwand
- 460: Aufhängeelement
- 470, 470', 470": Stirnseite des Verschlusselements
- 480: Längsseite des Verschlusselements

- 500: erste Drehbewegung
- 510: zweite Drehbewegung

## Patentansprüche

1. Stellmechanik (100) zum Einbau in einer Tasche (400) für ein Hängeförderersystem, wobei die Stellmechanik (100) zum Wechseln eines Zustands der Tasche (400) zwischen einem Beladezustand, in dem die Tasche (400) mit Objekten beladen werden kann, und einem Entladezustand, in dem die Objekte aus der Tasche (400) entladen werden, eingerichtet ist,
wobei die Stellmechanik (100) folgendes umfasst:
- ein Gehäuse (110, 110', 110");
- eine drehbar im Gehäuse (110, 110', 110") gelagerte Profilscheibe (120, 120', 120") mit mindestens einer Kontaktfläche (130, 130', 130"); und
- mindestens einen, insbesondere für jede Kontaktfläche einen, axial im Gehäuse (110, 110', 110") verschiebbaren Riegel (140, 140', 140");
wobei
- für jeden Riegel (140, 140', 140") ein zugeordnetes Rückstellelement (170', 170"), insbesondere eine Feder, vorgesehen ist, das den jeweiligen Riegel (140, 140', 140") gegen eine der Kontaktflächen (130, 130', 130") drückt;
- jede der Kontaktflächen (130, 130', 130") eine Oberfläche mit einem Höhenprofil aufweist;
- jeder Riegel (140, 140', 140") bei einer Drehbewegung der Profilscheibe (120, 120', 120") axial verschoben und entlang des Höhenprofils geführt wird; und
- eine durch eine Drehbewegung der Profilscheibe (120, 120', 120") verursachte axiale Verschiebung des mindestens einen Riegels (140, 140', 140") das Wechseln des Zustands der Tasche bewirkt.

2. Stellmechanik (100) gemäß Anspruch 1, wobei jede der Kontaktflächen (130, 130', 130") ein Höhenprofil mit mindestens zwei Bereichen (330, 340) unterschiedlicher Höhe aufweist, die durch mindestens eine absteigende Flanke (350) und mindestens eine ansteigende Flanke (360) miteinander verbunden sind, wobei die Steilheit der absteigenden Flanke (350) steiler ist als die Steilheit der ansteigenden Flanke (360), insbesondere um einen Faktor größer als 5 steiler ist.

3. Stellmechanik (100) gemäß Anspruch 2, wobei die absteigende Flanke (350) des Höhenprofils senkrecht oder im Wesentlichen senkrecht ist und die ansteigende Flanke (360) stetig ansteigend ist.

4. Stellmechanik (100) gemäß Anspruch 2 oder 3, ferner umfassend wenigstens einen Positionsgeber (190), der eingerichtet ist, eine Winkelposition der Profilscheibe (120, 120', 120") zu ermitteln, wobei die Stellmechanik (100) eingerichtet ist, eine Drehbewegung der Profilscheibe (120, 120', 120") mithilfe der ermittelten Winkelposition unmittelbar vor jeder der absteigenden Flanken (350) zu stoppen.

5. Stellmechanik (100) gemäß einem der Ansprüche 1 bis 4, wobei die Profilscheibe (120, 120', 120") durch einen Antrieb (150, 150', 150") direkt oder indirekt unter Nutzung eines Getriebes gedreht wird.

6. Stellmechanik (100) gemäß einem der Ansprüche 1 bis 5, wobei jede Kontaktfläche (130, 130', 130") der Profilscheibe (120, 120', 120") radial, insbesondere auf einer Umfangsfläche der Profilscheibe (120, 120', 120"), angeordnet ist.

7. Stellmechanik (100) gemäß einem der Ansprüche 1 bis 5, wobei die Profilscheibe (120, 120', 120") eine, insbesondere genau eine, Kontaktfläche (130, 130', 130") aufweist, die axial, insbesondere auf einer Stirnseite der Profilscheibe (120, 120', 120"), angeordnet ist.

8. Stellmechanik (100) gemäß Anspruch 7, ferner umfassend eine weitere drehbar im Gehäuse (110, 110', 110") gelagerte Profilscheibe (120, 120', 120") mit einer, insbesondere genau einer, Kontaktfläche (130, 130', 130"), die axial, insbesondere auf einer Stirnseite der weiteren Profilscheibe (120, 120', 120"), angeordnet ist.

9. Stellmechanik (100) gemäß einem der Ansprüche 1 bis 8, wobei die Drehbewegung der Profilscheibe (120, 120', 120") unidirektional erfolgt.

10. Stellmechanik (100) gemäß einem der Ansprüche 1 bis 9, wobei jeder Riegel (140, 140', 140") senkrecht oder im Wesentlichen senkrecht auf eine der Kontaktflächen (130, 130', 130") trifft.

11. Stellmechanik (100) gemäß einem der Ansprüche 1 bis 10, wobei der Einbau der Stellmechanik (100) in die Tasche in horizontaler oder vertikaler Richtung der Tasche erfolgt.

12. Stellmechanik (100) gemäß einem der Ansprüche 1 bis 11, wobei jeder Riegel (140, 140', 140") an einem Ende einen elastischen, insbesondere federnd gelagerten, Schnapper (240) umfasst.

13. Tasche (400) mit einer Stellmechanik (100) gemäß einem der Ansprüche 1 bis 12, wobei die Tasche (400) ein Verschlusselement (410) umfasst, das an wenigstens einer Stirnseite eine Öffnung (420, 420', 420"), insbesondere einen Schlitz, aufweist, wobei im Beladezustand mindestens ein Riegel (140, 140', 140") der Stellmechanik in eine der Öffnungen (420, 420', 420") des Verschlusselements (410) eingreift und wobei im Entladezustand keiner der Riegel (140, 140', 140") der Stellmechanik (100) in eine der Öffnungen (420, 420', 420") eingreift.

14. Tasche (400) mit einer Stellmechanik (100) gemäß Anspruch 13, wobei das Verschlusselement (410) in die Tasche (400) eingenäht ist.
